# FASCICULE DE BREVET EUROPEEN

(11) **EP 3 759 396 B1**
(45) Date de publication et mention de la délivrance du brevet: **03.12.2025**
(21) Numéro de dépôt: 19715146.7
(22) Date de dépôt: 26.02.2019
(51) Int. Cl.: F24C 15/04, C03C 17/36, C03C 17/34

(54) **DISPOSITIF CHAUFFANT MUNI D'UNE PORTE COMPRENANT UN VITRAGE TRIPLE**
HEIZGERÄT MIT EINER TÜR MIT DREIFACHVERGLASUNG
HEATING DEVICE PROVIDED WITH A DOOR COMPRISING A TRIPLE GLAZING

(30) Priorité: 28.02.2018 FR 1851773
(43) Date de publication de la demande: 06.01.2021
(73) Titulaire: SAINT-GOBAIN GLASS FRANCE, 92400 Courbevoie (FR)
(72) Inventeur: MORIN, Camille, 75010 PARIS (FR); HUIGNARD, Arnaud, 60200 COMPIEGNE (FR)
(74) Mandataire: Saint-Gobain Recherche
(86) Numéro de dépôt international: PCT/FR2019/050441
(87) Numéro de publication internationale: WO 2019/166736

(56) Documents cités:
- WO-A1-2011/104034
- WO-A1-2016/097560
- US-A- 5 337 727
- US-A1- 2012 084 963

## Description

L'invention concerne un dispositif chauffant muni d'une enceinte délimitant une cavité, ladite cavité étant fermée par une porte incorporant un vitrage confinant la chaleur dans la cavité du dispositif. L'invention concerne également une telle porte et son utilisation comme élément constitutif d'un tel dispositif.

Un dispositif chauffant selon l'invention comprend une enceinte délimitée par une ou plusieurs parois dont une porte vitrée. Des moyens de chauffage permettent le chauffage de la cavité à l'intérieur de l'enceinte à une température élevée. Les dispositifs chauffants peuvent être notamment choisis parmi les fours, les cheminées, les fourneaux...

Les vitrages utilisés comme éléments constitutifs d'une porte ou éventuellement d'une paroi d'un dispositif chauffant sont en général des vitrages multiples, c'est-à-dire des vitrages comprenant plusieurs substrats verriers, notamment des vitrages quadruples. Les vitrages multiples contribuent à maintenir la chaleur à l'intérieur du dispositif chauffant tout en gardant la surface extérieure du vitrage froide au toucher, pour la protection des utilisateurs contre les brûlures.

Un tel vitrage multiple comprend au moins deux substrats maintenus à distance de manière à délimiter un espace. Les faces du vitrage sont par convention désignées à partir de l'intérieur du dispositif chauffant et en numérotant les faces des substrats de l'intérieur vers l'extérieur du dispositif chauffant.

Les vitrages utilisés comme éléments constitutifs d'un dispositif chauffant peuvent comprendre des substrats revêtus de revêtements fonctionnels réfléchissant le rayonnement thermique, en particulier le rayonnement infrarouge (IR). Ces revêtements permettent de diminuer la quantité d'énergie dissipée vers l'extérieur du dispositif chauffant en réfléchissant la chaleur vers l'intérieur de l'enceinte. L'utilisation de ces revêtements concourt à réduire la consommation énergétique du dispositif chauffant tout comme l'échauffement de la paroi externe du vitrage constitutif de la porte dudit four.

Par exemple, la demande de brevet EP1293726 A2 décrit une barrière en verre comprenant sur une première surface un revêtement réfléchissant la chaleur déposé par pyrolyse et sur une deuxième surface un revêtement réfléchissant la chaleur déposé par un procédé de dépôt physique en phase vapeur (PVD).

Les revêtements comprenant des couches métalliques fonctionnelles à base d'argent (ou couches d'argent) sont connus comme les plus performants pour réduire l'émissivité des vitrages tout en préservant les qualités optiques et esthétiques de la paroi ou de la porte, notamment une bonne vision à travers celle-ci. Ces revêtements assurent également une meilleure protection des utilisateurs, une plus basse consommation énergétique et un plus grand confort d'utilisation.

Cependant, la résistance thermique des revêtements comprenant ces couches métalliques fonctionnelles à base d'argent est souvent insuffisante. La faible résistance chimique et thermique de ces revêtements peut se traduire à long terme par l'apparition de défauts tels que des points de corrosion, des rayures, le démouillage de l'argent, voire de l'arrachement total ou partiel de l'empilement.

Ce phénomène est accentué lorsque de tels vitrages incorporant des couches minces d'argent sont utilisés dans des dispositifs chauffants, par exemple comme porte de fours, et sont soumis à des cycles de traitement thermique à températures élevées longs et répétés dans un environnement humide, comme les traitements de pyrolyse. Ces cycles de traitement thermique en milieu humide accélèrent alors la dégradation des couches d'argent notamment par démouillage ou corrosion de l'argent.

Egalement, tout défaut ou rayure, qu'il soit dû à la corrosion ou à des sollicitations mécaniques, sont susceptibles d'altérer non seulement les performances énergétiques et optiques mais également l'esthétique du substrat revêtu.

La demande US 2012/0084963 divulgue cependant un vitrage multiple utilisé comme un élément constitutif d'une porte de four comprenant un substrat transparent revêtu d'un empilement de couches minces comprenant au moins une couche métallique fonctionnelle à base d'argent et une couche de protection supérieure à base d'oxyde de zirconium. Les couches à base d'oxyde de zirconium protègent l'empilement lors d'un traitement thermique à température élevée. Cependant, les substrats revêtus de telles couches de protection sont sujets à la corrosion en milieu humide à chaud.

La demande WO2016/097560 décrit un vitrage comprenant un substrat transparent revêtu d'un empilement de couches minces comprenant au moins une couche métallique fonctionnelle à base d'argent caractérisé en ce que l'empilement comprend une couche de protection supérieure à base d'oxyde de titane et de zirconium.

La publication WO2011/104034 décrit un dispositif chauffant une porte de four comprenant trois feuilles de verre, comprenant des revêtements réfléchissant la chaleur, la distance séparant les deux premières feuilles étant comprise entre 0,5 et 1 mm et de 3 cm pour l'espacement suivant.

La demande de brevet US2003/0113550 décrit un vitrage multiple pouvant servir de porte de four et comprenant une succession de substrats verriers, des empilements réfléchissant la chaleur étant disposés sur différentes faces de ces substrats verriers.

Bien que les empilements décrits dans les publications reportées précédemment permettent en principe de satisfaire les critères requis de résistance chimique et mécanique à la température habituelle de fonctionnement du four, il est actuellement encore recherché des configurations de porte de four dont les performances d'isolation thermiques sont optimales et faciles à fabriquer, de préférence à moindre coût.

Il est en particulier recherché une architecture permettant non seulement de garantir une face extérieure froide de la paroi du coté extérieur, c'est-à-dire garantissant la sécurité des utilisateurs vis-à-vis des éventuelles brûlures, mais également de confiner efficacement la chaleur dans l'enceinte ou la cavité du dispositif. Egalement, il est recherché un dispositif qui est le plus économe possible en énergie, en particulier dont le refroidissement de la paroi ne nécessite pas ou peu d'action supplémentaire, comme par exemple la ventilation d'air de refroidissement au travers des différents substrats constitutifs de ladite paroi.

L'objet de la présente invention est de proposer un dispositif chauffant suivant la revendication 7 et une porte ou une paroi suivant la revendication 1 équipant un tel dispositif, permettant de résoudre efficacement les problèmes précédemment exposés.

Par chaleur, on entend tout ou partie du rayonnement émis par les résistances du four, notamment le rayonnement infrarouge compris entre 2 micromètres et 10 micromètres.

Plus précisément, la présente invention porte sur un dispositif chauffant tel que décrit dans les revendications qui suivent, muni d'une enceinte délimitant une cavité, ledit dispositif comprenant une porte ou une paroi, incorporant un vitrage triple comprenant trois substrats transparents.

Par vitrage triple on entend un assemblage de trois feuilles de verre successives, mais non liées entre elles par des espaceurs, notamment hermétiquement, comme c'est le cas dans un triple vitrage typiquement utilisé dans le domaine du vitrage pour bâtiment.

Les substrats verriers selon la présente invention sont destinés à la fabrication d'un dispositif chauffant tel qu'un four. Leur surface est donc typiquement inférieure à 0,5 m²

On donne ci-après d'autres détails de mise en oeuvre et/ou de réalisation préférés de la présente invention qui peuvent bien entendu être combinés entre eux le cas échéant :
- les faces 1 et 2 du premier substrat et 3 du second substrat sont recouvertes de revêtements réfléchissants la chaleur, les faces 4 à 6 étant de préférence dépourvues de tels revêtements ;
- e₁>e₂;
- e₂>e₁ ;
- e₁ et e₂ sont compris entre 4 et 15 mm ;
- le rapport entre le plus grand espacement et le plus petit espacement est inférieur à 5, de préférence inférieur à 4 et de manière très préférée inférieure à 3,5, voire même inférieur à 3,0.
- Les espacements intermédiaires entre les substrats sont remplis d'air en contact avec l'atmosphère extérieur (et donc d'air à la pression ordinaire).
- Les substrats sont parallèles entres eux..
- le vitrage triple comprend :
   a) pour le premier substrat au contact de la cavité :
      - sur une première face 1, tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
      - sur l'autre face 2, tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent,
   b) pour le second substrat :
      - sur la face 3 tournée vers l'intérieur de ladite cavité, un troisième empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
      - la face 4 du second substrat étant de préférence dépourvue de revêtement réfléchissant la chaleur,
   les faces 5 et 6 du troisième substrat étant dépourvues de revêtement réfléchissant la chaleur ;
- le vitrage triple comprend :
   a) pour le premier substrat au contact de la cavité :
      - sur une première face 1, tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
      - sur l'autre face 2, tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent.
   b) pour le second substrat :
      - sur la face 3 tournée vers l'intérieur de ladite cavité, un troisième empilement réfléchissant la chaleur essentiellement grâce à une ou plusieurs couches fonctionnelles à base d'un métal choisi parmi l'or ou l'argent, de préférence l'argent
      - la face 4 du second substrat étant de préférence dépourvue de revêtement réfléchissant la chaleur,
   les faces 5 et 6 du troisième substrat étant dépourvues de revêtement réfléchissant la chaleur ;
- le premier revêtement (ou premier empilement) sur la face 1 comprend comme couche fonctionnelle un oxyde d'indium et d'étain dont le pourcentage atomique de Sn dans l'oxyde est avantageusement compris dans un domaine allant de 5 à 70%, notamment de 10 à 60% ;
- le premier revêtement (ou premier empilement) sur la face 1 comprend comme couche fonctionnelle une couche d'oxyde d'indium et d'étain comprenant de préférence une proportion massique d'environ 85 à 95 % d'oxyde d'indium et d'environ 15 à 5 % d'oxyde d'étain ;
- le premier revêtement (ou premier empilement) sur la face 1 comprend successivement à partir du substrat :
   - au moins une sous couche d'un composé diélectrique notamment choisi parmi le nitrure de silicium, l'oxyde de silicium, ou l'oxyde d'étain et de zinc
   - une couche fonctionnelle d'ITO,
   - au moins une surcouche d'un composé diélectrique notamment choisi parmi le nitrure de silicium, l'oxyde de silicium, ou l'oxyde d'étain et de zinc ;
- le premier revêtement (ou premier empilement) sur la face 1 comprend successivement à partir du substrat :
   - au moins une sous couche d'un composé diélectrique notamment choisi parmi le nitrure de silicium, l'oxyde de silicium, l'oxyde d'étain et de zinc
   - une première couche fonctionnelle d'ITO,
   - une couche intermédiaire d'un composé diélectrique, notamment choisi parmi l'oxyde de silicium, de nitrure de silicium ou d'oxyde d'étain et de zinc,
   - une deuxième couche fonctionnelle d'ITO,
   - au moins une surcouche d'un composé diélectrique notamment choisi parmi le nitrure de silicium, l'oxyde de silicium, ou l'oxyde d'étain et de zinc ;
- le second revêtement (ou second empilement) sur la face 2 comprend au moins une couche métallique fonctionnelle à base d'argent et au moins deux ensembles diélectriques, chaque ensemble diélectrique comportant au moins une couche diélectrique, de manière à ce que chaque couche à base d'argent soit disposée entre deux couches diélectriques ;
- le troisième revêtement (ou troisième empilement) sur la face 3 ou la face 4 du deuxième substrat comprend au moins une couche métallique fonctionnelle à base d'argent et de préférence au moins deux ensembles diélectriques, chaque ensemble diélectrique comportant au moins une couche diélectrique, de manière à ce que chaque couche à base d'argent soit disposée entre deux couches diélectriques ;
- au moins le substrat revêtu de l'empilement est bombé et/ou trempé et de préférence dans lequel tous les substrats du vitrage sont trempés.

L'invention se rapporte également à une porte ou une paroi pour dispositif chauffant tel que décrite dans les revendications qui suivent.

Selon des modes particuliers et préférés d'une porte selon l'invention :
- les faces 1 et 2 du premier substrat et 3 du second substrat sont recouvertes de revêtements réfléchissants la chaleur, les faces 4 à 6 étant de préférence dépourvues de tels revêtements ;
- e₁>e₂;
- e₂>e₁ ;
- ledit vitrage triple comprend :
   a) pour le premier substrat au contact de la cavité :
      - sur une première face 1, tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
      - sur l'autre face 2, tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent.
   b) pour le second substrat :
      - sur la face 3 tournée vers l'intérieur de ladite cavité, un troisième empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb ;
- ledit vitrage triple comprend :
   a) pour le premier substrat au contact de la cavité :
      - sur une première face 1, tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
      - sur l'autre face 2, tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent.
   b) pour le second substrat :
      - sur la face 3 tournée vers l'intérieur de ladite cavité, un troisième empilement réfléchissant la chaleur essentiellement grâce à une ou plusieurs couches fonctionnelles à base d'argent.

L'invention concerne également une utilisation d'un vitrage triple telle que décrite précédemment comme élément constitutif de la paroi ou d'une porte d'un dispositif chauffant muni d'une enceinte et/ou d'une cavité tel qu'un four.

Bien entendu, toutes les caractéristiques décrites précédemment en relation avec le dispositif chauffant concernent également ladite paroi ou porte, bien qu'elles ne soient pas reprises ici pour des questions de concision.

Les substrats transparents utilisés selon l'invention sont de préférence en un matériau rigide minéral, de préférence en verre, notamment silico-sodo-calcique, borosilicate, aluminosilicate. Ils peuvent également être en vitrocéramique. Selon un mode de réalisation avantageux, les substrats sont des verres borosilicates qui résistent bien à de très hautes températures.

L'épaisseur du ou des substrats varie généralement entre 0,5 mm et 19 mm. L'épaisseur du ou des substrats est de préférence inférieure ou égale à 6 mm, voire inférieure ou égale 4 mm.

Les substrats transparents revêtus des empilements peuvent avoir subi un traitement thermique à température élevée choisi parmi un recuit, par exemple par un recuit flash tel qu'un recuit laser ou flammage, une trempe et/ou un bombage. La température du traitement thermique est supérieure à 400°C, de préférence supérieure à 450°C, ou même supérieure à 500°C. Le substrat revêtu de l'empilement peut donc être bombé et/ou trempé. Le premier substrat revêtu des empilements sur chaque face est de préférence un verre trempé notamment lorsqu'il fait partie d'un vitrage utilisé dans comme élément constitutif d'un dispositif chauffant ou d'une porte anti-feu.

Selon l'invention, le vitrage est triple et comporte donc uniquement trois substrats, de préférence encore verriers, c'est-à-dire un substrat intérieur (premier substrat), un substrat central ou intermédiaire (second substrat) et un substrat extérieur (troisième substrat), les trois substrats délimitant ainsi 6 faces. La face 1 fait face à l'intérieur du dispositif chauffant et constitue donc la paroi intérieure du vitrage. Les faces 2 à 5 sont à l'intérieur du vitrage triple. La face 6 est à l'extérieur du dispositif chauffant et constitue donc la paroi extérieure du vitrage.

En ce qui concerne le premier empilement, celui-ci comprend préférence une ou plusieurs couches fonctionnelles en oxyde transparent conducteur en tant que couche fonctionnelle réfléchissant la chaleur (et donc pas d'autres couches conductrices notamment en un métal tel que l'argent). On utilise selon l'invention tout revêtement comprenant une couche fonctionnelle à base de, et de préférence en oxyde transparent conducteur du type ITO, c'est-à-dire basé sur un oxyde mixte entre l'étain et l'indium. Par l'expression « à base de », on entend notamment au sens de la présente invention que la couche concernée comprend au moins 80%, voire 90% et même 95% en poids du composé considéré. La couche peut même être avantageusement constituée ou essentiellement constituée d'un tel composé. De préférence, l'empilement déposé est un empilement dont la ou les couches fonctionnelles sont à base d'ITO. Le pourcentage atomique de Sn dans l'oxyde est avantageusement compris dans un domaine allant de 5 à 70%, notamment de 10 à 60%. Plus particulièrement, selon l'invention, on utilise de préférence une couche d'un mélange d'oxyde d'indium(III) (In2O3) et d'oxyde d'étain (IV) (SnO2), dans la proportion massique d'environ 85 à 95 % du premier et d'environ 15 à 5 % du second. Ces couches conductrices et néanmoins transparentes présentent en effet de faibles émissivités, corrélées avec des faibles résistivités ou résistances carrées. Ce sont des couches de matériaux obtenues par dépôt sous vide par pulvérisation cathodique, éventuellement assistée par champ magnétique («Magnétron»). Plus particulièrement, de façon inattendue, des performances très supérieures ont été obtenues lorsque ces empilements à base d'ITO étaient combinés, sur l'autre face du substrat verrier, à un revêtement de faible émissivité comprenant une couche fonctionnelle (réflective) en argent.

Selon un mode préféré de réalisation de la présente invention, l'empilement déposé sur la première face est un empilement comprenant deux couches fonctionnelles à base d'ITO, les deux couches fonctionnelles étant séparées par au moins une couche d'un matériau diélectrique.

Chaque couche à base d'ITO peut notamment posséder une épaisseur physique comprise dans un domaine allant de 20 à 80 nm, notamment de 30 à 80 nm. L'épaisseur physique cumulée de toutes les couches à base d'ITO est de préférence comprise dans un domaine allant de 40 à 200 nm, notamment de 60 à 160 nm.

La ou chaque couche intermédiaire diélectrique est de préférence à base d'un composé choisi parmi les oxydes, les nitrures ou les oxynitrures de silicium, d'aluminium, de titane, d'étain, de zinc, de zirconium, de niobium, de nickel, de chrome ou d'un de leurs mélanges. Elle est de préférence essentiellement constituée d'un tel composé, voire constituée d'un tel composé.

Plus particulièrement, la (ou les) couche intermédiaire diélectrique est de préférence essentiellement constituée d'un composé choisi parmi un oxyde, nitrure ou oxynitrure de silicium et/ou d'aluminium, un nitrure ou un oxyde de titane, un oxyde de nickel et de chrome, un nitrure de niobium, un oxyde d'étain et de zinc. De manière préférée, la ou chaque couche intermédiaire diélectrique est à base (ou essentiellement constituée) d'oxyde de silicium, de nitrure de silicium, d'oxyde de titane, d'oxyde d'étain et de zinc. L'oxyde ou le nitrure de silicium sont particulièrement préférés. Le nitrure de silicium ou l'oxyde d'étain et de zinc sont particulièrement appréciés car leur indice de réfraction est proche de celui de l'ITO, si bien que leur présence ne perturbe pas les propriétés optiques de l'empilement. De préférence, l'indice de réfraction pour une longueur d'onde de 550 nm de la (ou les) couche intermédiaire (notamment de l'unique couche intermédiaire) est d'au moins 1,8, notamment 1,9, avantageusement compris dans un domaine allant de 1,8 à 2,5, notamment de 1,9 à 2,2. Le nombre de couches intermédiaires séparant les couches à base d'ITO varie de préférence de 1 à 5, notamment de 1 à 3 ou de 1 ou 2. Avantageusement, l'empilement de couches minces comprend au moins deux couches (notamment deux couches) à base d'un oxyde transparent électro-conducteur séparées par au plus deux couches intermédiaires, notamment par une seule couche intermédiaire.

Parmi les combinaisons préférées, l'empilement comprend (ou est constitué de) successivement à partir du substrat :
- une couche d'adhésion, par exemple à base ou essentiellement constituée de silice,
- une première couche d'ITO,
- une couche intermédiaire diélectrique, par exemple à base ou essentiellement constituée de silice, de nitrure de silicium ou d'oxyde d'étain et de zinc,
- une deuxième couche d'ITO,
- une couche barrière à l'oxygène, par exemple à base ou essentiellement constituée de nitrure de silicium,
- une couche à bas indice de réfraction, par exemple à base ou essentiellement constituée de silice.

En ce qui concerne le second empilement réfléchissant la chaleur essentiellement grâce à une ou plusieurs couches fonctionnelles à base d'un métal choisi parmi l'or ou de préférence l'argent, disposé notamment en face 2 du vitrage triple.

Les couches à base d'or ou de préférence à base d'argent sont déposées entre des revêtements diélectriques qui comprennent généralement plusieurs couches diélectriques permettant d'ajuster les propriétés optiques de l'empilement et permettre une transmission lumineuse suffisante pour permettre la vision extérieure de l'enceinte. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

L'empilement est déposé par pulvérisation cathodique, notamment assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques. On entend par couche mince, une couche présentant une épaisseur comprise entre 0,1 nm et 200 micromètres, suivant sa nature et sa composition.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche métallique fonctionnelle est typiquement à base d'argent et comprend en général au moins 80 %, de préférence au moins 90 % et mieux au moins 95 %, voire au moins 98% en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

L'empilement peut comprendre au moins une couche de blocage dont la fonction est de protéger les couches d'argent en évitant une éventuelle dégradation liée au dépôt d'un revêtement diélectrique ou liée à un traitement thermique. Ces couches de blocages sont situées de préférence au-contact des couches métalliques fonctionnelles à base d'argent.

L'empilement peut comprendre au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,2 nm ou d'au moins 0,5 nm et/ou
- d'au plus 5,0 nm ou d'au plus 2,0 nm.

Les revêtements diélectriques présentent une épaisseur supérieure à 15 nm, de préférence comprise entre 15 et 50 nm et mieux de 30 à 45 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, La couche diélectrique à base de nitrure de silicium et/ou d'aluminium est de préférence au-contact de la couche de protection supérieure qui peut être avantageusement à base d'oxyde de titane ou à base d'oxyde de titane et de zirconium tel que décrit dans la demande WO2016/097560. La couche diélectrique à base de nitrure de silicium et/ou d'aluminium a notamment une épaisseur :
- inférieure ou égale à 100 nm, inférieure ou égale à 50 nm ou inférieure ou égale à 45 nm, et/ou
- supérieure ou égale à 15 nm, supérieure ou égale à 20 nm ou supérieure ou égale à 25 nm.

Selon ce mode de réalisation, l'empilement peut par exemple comprendre :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

Selon un mode de réalisation, l'empilement comprend :
- un revêtement diélectrique situé en-dessous de la couche métallique fonctionnelle à base d'argent comprenant au moins une couche diélectrique à base de nitrure de silicium et/ou d'aluminium et éventuellement une couche diélectrique à fonction stabilisante à base d'oxyde de zinc,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

Selon un autre mode possible de réalisation de l'invention, le second empilement peut comprendre plusieurs couches fonctionnelles à base d'un métal choisi parmi l'or ou de préférence l'argent, et en particulier deux ou trois couches en argent, chacune d'elle étant séparée de la suivante de préférence par au moins une couche de matériau diélectrique notamment tels que ceux précédemment décrits.

Selon un tel mode de réalisation, l'empilement peut par exemple comprendre :
- un revêtement diélectrique situé en-dessous de la couche métallique fonctionnelle à base d'argent,
- éventuellement une couche de blocage,
- une première couche métallique fonctionnelle à base d'argent,
- éventuellement une couche de blocage,
- un revêtement diélectrique situé au-dessus de la première couche métallique fonctionnelle à base d'argent,
- éventuellement une couche de blocage,
- une deuxième couche métallique fonctionnelle à base d'argent,
- éventuellement une couche de blocage,
- un revêtement diélectrique situé au-dessus de la deuxième couche métallique fonctionnelle à base d'argent,
- une couche de protection supérieure.

En ce qui concerne le revêtement présent sur la face 3 ou la face 4 du vitrage triple, de préférence sur la face 3 du vitrage triple, celui-ci est de préférence un empilement dont la couche fonctionnelle est à base d'oxyde d'étain dopé au fluor (SnO2:F). Ce dernier matériau est habituellement déposé par voie chimique, comme par exemple par dépôt de vapeur chimique (« CVD »), éventuellement améliorée par plasma (« PECVD »).

Alternativement et de manière aussi préférée, le revêtement présent sur la face 3 ou la face 4 du vitrage triple, de préférence sur la face 3 du vitrage triple, est un empilement dont la couche fonctionnelle est une couche réfléchissant la chaleur à base d'argent ou un empilement comprenant plusieurs couches fonctionnelles en argent, notamment du type décrit précédemment pour la face 2.

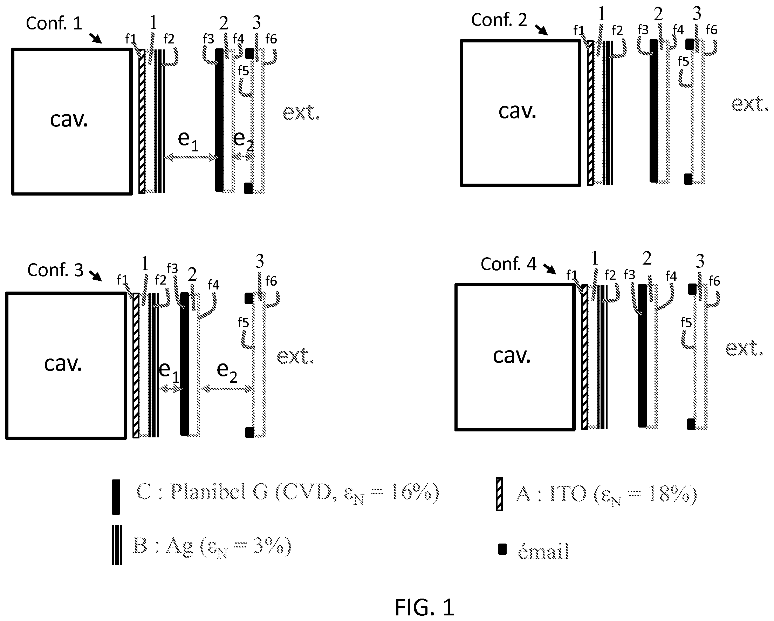

On donne ci-après différents modes de réalisation de la présente invention, en relation avec la figure 1 ci-joint annexée :
La figure 1 illustre un exemple de dispositif chauffant comprenant un vitrage triple selon l'invention.

Le vitrage triple selon la figure 1 comprend trois substrats verriers disposés parallèlement et délimitant ainsi depuis l'intérieur vers l'extérieur de la cavité du dispositif six surfaces de verre successives et notées conventionnellement de 1 à 6 depuis l'intérieur vers l'extérieur. Entre le premier substrat de verre et le second espacement de verre, on a ménagé un espacement e₁. Entre le premier substrat de verre et le second espacement de verre, on a ménagé un espacement e₂, différent de e₁. Les espacements entres les substrats sont remplis d'air à la pression ambiante et en communication de fluide avec l'extérieur. Trois configurations selon l'invention sont représentées sur la figure 1 :
a) un espacement e₁ de 14 mm et un espacement e₂ de 5 mm (conf.1).
b) un espacement e₁ de 12 mm et un espacement e₂ de 7 mm (conf. 2).
c) un espacement e₁ de 5 mm et un espacement e₂ de 14 mm (conf. 3).

Selon la configuration 4 comparative (conf. 4), les trois substrats sont espacés d'une même distance de 9,5 mm.

### Exemples :

Dans tous les exemples qui suivent, on a fabriqué des portes de four comprenant un vitrage triple et conformes aux configurations décrites précédemment en relation avec la figure 1.

### Plus précisément :

Sur un premier substrat en verre clair sodo-calcique clair d'une épaisseur de 4mm, on dépose des empilements de couches minces tels que définis ci-après :
Sur une première face 1 du substrat, on dépose un empilement conforme à l'exemple 1 de la demande WO2015/033067.

Plus précisément, on a déposé par pulvérisation cathodique magnétron AC sur un substrat de verre clair silico-sodo-calcique de 4 mm d'épaisseur l'empilement **A** suivant :
Verre / SiNₓ (2nm) / SiO₂ (34nm) / ITO (118nm) / SiNₓ (6nm) / SiO₂ (65nm) / TiO₂ (3nm).

Les chiffres entre parenthèses correspondent aux épaisseurs physiques déposées pour chaque couche, exprimées en nanomètres.

Les couches d'oxyde de silicium et de nitrure de silicium ont été déposées à l'aide de cibles de silicium dopé à l'aluminium (8% atomique) sous un plasma d'argon avec ajout respectivement d'oxygène et d'azote. Les couches d'ITO ont été déposées à l'aide de cibles d'ITO sous un plasma d'argon. La couche d'ITO est constituée d'un mélange d'oxyde d'indium(III) (In₂O3) et d'oxyde d'étain (IV) (SnO₂), dans la proportion massique d'environ 90 % du premier et d'environ 10 % du second. La couche barrière de SiNₓ a été déposée sous une pression de 2,0 µbar. L'émissivité normale de cet empilement, telle que mesurée selon la norme FR-EN 12898, est de 18%.

Sur la deuxième face 2 de ce premier substrat, on dépose selon les techniques classiques de dépôt par pulvérisation cathodique l'empilement **B** suivant comportant une couche fonctionnelle d'argent, et dont l'émissivité normale est de 3% :
Verre / SiNₓ (30nm) / ZnO (5nm) / NiCr (0,5nm) / Ag (12nm) / NiCr (0,5nm) / ZnO (5nm) / SiNₓ (30nm) / TiO₂ (3nm).

Comme second substrat, on utilise un substrat commercialisé par la société AGC sous la référence Planibel G^{®}, comprenant une feuille de verre clair sodo-calcique clair d'une épaisseur de 4mm sur une face de laquelle est déposé un revêtement C par pyrolyse-CVD, constitué d'une couche d'oxyde d'étain dopé au fluor.

Le troisième substrat est une feuille de verre clair sodo-calcique clair d'une épaisseur de 4mm dont les faces sont nues, c'est-à-dire non recouvertes des revêtements précédents.

### Exemples 1 à 3 (selon l'invention):

On fabrique selon les techniques de l'art des portes de four comprenant l'assemblage des trois substrats verriers décrits précédemment selon les configurations A à C décrites en relation avec la figure 1 dont :
- un premier substrat tel que décrit précédemment comprenant le revêtement **A** sur la face 1 et le revêtement **B** sur la face 2 de la porte,
- le second substrat Planibel G^{®}, de telle façon que le revêtement C est orienté vers l'intérieur de la porte, c'est-à-dire se trouve en face 3 du vitrage triple et de la porte,
- puis le troisième substrat verrier, dont les faces nues sont les faces 5 et 6 du vitrage triple (cf. figure 1) et de la porte.

Selon l'exemple 1 on ménage un espacement e₁ de 14 mm entre les deux premiers substrats et un espacement e₂ de 5 mm entre le deuxième et le troisième substrat.

Selon l'exemple 2 on ménage un espacement e₁ de 12 mm entre les deux premiers substrats et un espacement e₂ de 7 mm entre le deuxième et le troisième substrat.

Selon l'exemple 3 on ménage un espacement e₁ de 5 mm entre les deux premiers substrats et un espacement e₂ de 14 mm entre le deuxième et le troisième substrat.

### Exemple 4 (comparatif):

Selon cet exemple 4, on reproduit les mêmes étapes de fabrication que les exemples 1 à 3 mais les trois substrats verriers sont espacés d'une même distance de 9,5 mm.

### Exemple 5 (comparatif):

Selon cet exemple 5, on assemble cette fois un vitrage quadruple pour la fabrication de la porte de four en reprenant la configuration de l'exemple 4 à laquelle on ajoute coté extérieur un quatrième substrat de verre, le quatrième substrat étant un substrat de verre clair d'épaisseur 4 mm et dont les faces sont nues, chaque substrat étant espacé du suivant d'une distance de 6 mm de façon à conserver une épaisseur de porte comparable aux exemples précédents.

### Exemple 6 (comparatif):

Selon cet exemple 6, on assemble cette fois un vitrage triple pour la fabrication de la porte de four, en utilisant trois substrats Planibel G^{®}. Les substrats Planibel sont tous orientés de telle façon que le revêtement C soit tourné vers l'intérieur de la porte, c'est-à-dire que le revêtement C est positionné en face 1, 3, et 5 du vitrage triple. Selon cet exemple 6, on ménage un espacement e₁ de 14 mm entre les deux premiers substrats et un espacement e₂ de 5 mm entre le deuxième et le troisième substrat.

### Exemple 7 (comparatif):

Selon cet exemple 7, on assemble cette fois un vitrage quadruple pour la fabrication de la porte de four, en utilisant trois substrats Planibel G^{®} comme décrit dans l'exemple 6. Les substrats Planibel sont utilisés comme les trois premiers substrats du quadruple vitrage. Ils sont tous orientés de telle façon que le revêtement C soit tourné vers l'intérieur de la porte, c'est-à-dire que le revêtement C est positionné en face 1, 3, et 5 du quadruple vitrage, le quatrième substrat étant un substrat de verre clair d'épaisseur 4 mm et dont les faces sont nues. Les substrats sont espacés de la même distance d'environ 6 mm.

La cavité d'un four équipé de résistances et muni des différentes portes selon les exemples 1 à 6 est ensuite chauffée à une température de l'ordre de 430 °C.

Les résultats sont reportés dans le tableau 1 ci-dessous :
Dans le tableau 1 on note A une face revêtue par l'empilement A (comprenant la couche fonctionnelle d'ITO), B une face revêtue par l'empilement B (comprenant la couche fonctionnelle d'argent), C une face revêtue par le revêtement C (comprenant la couche pyrolytique SnO₂ :F) et X une face non revêtue.

On indique que, selon les critères GIFAM (Groupement Interprofessionnel des Fabricants d'Appareils d'Equipement Ménager), la température maximale de la paroi extérieure de la porte d'un four ne doit jamais excéder 70°C pour que l'appareil soit considéré « à porte froide ».

**Tableau 1**

| Exemple | F1 | F2 | F3 | F4 | F5 | F6 | F7 | F8 | e₁ | e₂ | e₃ | T° moyenne Cavité (°C) | Température paroi extérieure (°C) |
|---|---|---|---|---|---|---|---|---|---|---|---|---|---|
| 1* | A | B | C | X | X | X | - | - | 14 | 5 | - | 430 | 67 |
| 2* | A | B | C | X | X | X | - | - | 12 | 7 | - | 430 | 70 |
| 3* | A | B | C | X | X | X | - | - | 5 | 14 | - | 430 | 70 |
| 4 | A | B | C | X | X | X | - | - | 9,5 | 9,5 | - | 430 | 77 |
| 5 | A | B | C | X | X | X | X | X | 6 | 6 | 6 | 430 | 65 |
| 6 | C | X | C | X | C | X | - | - | 14 | 5 | - | 430 | 83 |
| 7 | C | X | C | X | C | X | X | X | 6 | 6 | 6 | 430 | 73 |

| | | | | | | | | | | | | | |
|---|---|---|---|---|---|---|---|---|---|---|---|---|---|
| *invention | | | | | | | | | | | | | |

Dans le tableau 1, la température de la paroi extérieure de la porte indique la température maximale mesurée sur la vitre extérieure de la porte, e₁ est l'espacement entre le substrat 1 et le substrat 2, e₂ est l'espacement entre le substrat 2 et le substrat 3 dans un vitrage triple. Dans le cas d'un vitrage quadruple, e₃ est l'espacement entre le substrat 3 et le substrat 4.

Les résultats reportés dans le tableau 1 démontrent les avantages de la présente invention :
L'exemple 7 est représentatif d'une porte de four actuellement utilisée. Elle comprend 4 vitrages, un revêtement réfléchissant la chaleur étant disposé sur les faces 1, 3 et 5 du vitrage. Pour une température moyenne de la cavité de 430°C, on observe une température extérieure de 73°C.

L'exemple 5 de référence est un vitrage quadruple dans lequel des revêtements réfléchissants la chaleur ont été déposés sur les faces 1, 2 et 3 des différents substrats verriers. Dans cette configuration la température maximale mesurée sur la face 6 extérieure de la porte, au contact de l'extérieur, est égale à 65°C lorsque la cavité du four est portée à 430°C. Une telle température permet de garantir la sécurité de l'utilisateur, même lorsque le four est porté à très haute température, dans des conditions de pyrolyse par exemple. L'inconvénient d'une telle configuration est cependant lié à l'utilisation de 4 substrats de verre, alourdissant la porte et rendant sa fabrication sensiblement plus coûteuse.

Dans l'exemple 4, on a supprimé le quatrième substrat, l'espacement e₁ entre les premier et second substrats et e₂ entre les deuxième et troisième substrat étant maintenu sensiblement identique. On observe alors une augmentation significative de la température extérieure de la porte.

Dans les exemples 1 à 3 selon l'invention, on a modifié la configuration de l'exemple 4 (configuration en vitrage triple) en modifiant les espacements respectifs e₁ et e₂, l'épaisseur de la porte étant maintenue constante. On observe une diminution significative de la température extérieure de la porte, jusqu'à des valeurs comparables à celle de l'exemple 5 de référence. Une configuration particulièrement avantageuse de l'invention dans laquelle e₁ est supérieur à e₂ est illustrée par l'exemple 1.

Ainsi, selon l'invention et grâce à une combinaison particulière associant un vitrage triple muni de trois empilements réfléchissant la chaleur respectivement sur les faces 1, 2 et 3 dudit vitrage triple et un espacement particulier et sélectionné entre les trois substrats verriers, il est possible de proposer des portes de fours allégées mais présentant tout de même toutes les garanties de sécurité pour l'utilisateur.

L'exemple 6 est à comparer à l'exemple 7 conforme à la pratique actuelle. On peut ainsi observer que la suppression du quatrième substrat (exemple 6) ne peut dans ce cas être compensée par un écartement différent entre les trois substrats comme observé par comparaison entre les exemples respectifs 5 et 1 à 3.

Il apparaît ainsi au vu de ces deux exemples que c'est bien la combinaison particulière du positionnement des revêtements réfléchissants et de la sélection de l'espacement entre les substrats qui permet de minimiser la température de la face extérieure de la porte.

## Revendications

1. Porte ou paroi pour dispositif chauffant comprenant un vitrage triple dont les trois substrats transparents peuvent délimiter depuis l'intérieur vers l'extérieur de la cavité dudit dispositif des faces numérotées respectivement 1 à 6, au moins les faces 1 et 2 du premier substrat et 3 et/ou 4 du second substrat étant recouvertes de revêtements réfléchissant la chaleur, porte ou paroi dans laquelle l'espacement moyen e₁ entre le premier substrat et le second substrat et l'espacement moyen e₂ entre le second et le troisième substrat est différent, le rapport entre le plus grand espacement et le plus petit espacement étant supérieur à 1,1, de préférence supérieur à 1,5 et de manière très préféré supérieur à 2, voire même supérieur à 2,5, e₁ et e₂ étant compris entre 2 et 20 mm.

2. Porte ou paroi pour dispositif chauffant tel que décrit dans la revendication précédente dans lequel les faces 1 et 2 du premier substrat et 3 du second substrat sont recouvertes de revêtements réfléchissants la chaleur, les faces 4 à 6 étant dépourvues de tels revêtements.

3. Porte ou paroi pour dispositif chauffant tel que décrit dans l'une des revendications 1 ou 2, dans lequel e₁>e₂.

4. Porte ou paroi pour dispositif chauffant tel que décrit dans l'une des revendications 1 ou 2, dans lequel e₂>e₁.

5. Porte ou paroi pour dispositif chauffant tel que décrit dans la revendication 1 dans lequel ledit vitrage triple comprend :
a) pour le premier substrat pouvant être au contact de la cavité :
- sur une première face 1, destinée à être tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
- sur l'autre face 2, destinée à être tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent.
b) pour le second substrat :
- sur la face 3 destinée à être tournée vers l'intérieur de ladite cavité, un troisième empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb.

6. Porte ou paroi pour dispositif chauffant tel que décrit dans la revendication 1 dans lequel ledit vitrage triple comprend :
a) pour le premier substrat pouvant être au contact de la cavité :
- sur une première face 1, destinée à être tournée vers l'intérieur et au contact direct de ladite cavité, un premier empilement réfléchissant la chaleur essentiellement grâce à une ou plusieurs couches fonctionnelles à base d'un oxyde transparent conducteur, de préférence choisi parmi les oxydes mixte d'étain et d'indium ou les oxydes d'étain dopé fluor ou Sb,
- sur l'autre face 2, destinée à être tournée vers l'extérieur de ladite cavité, un second empilement réfléchissant la chaleur essentiellement grâce à une ou plusieurs couches fonctionnelles à base d'un métal choisi parmi l'or ou l'argent, de préférence l'argent.
b) pour le second substrat :
- sur la face 3 destinée à être tournée vers l'intérieur de ladite cavité, un troisième empilement réfléchissant la chaleur essentiellement grâce à une ou plusieurs couches fonctionnelles à base d'un métal choisi parmi l'or ou l'argent, de préférence l'argent.

7. Dispositif chauffant muni d'une enceinte délimitant une cavité, ledit dispositif comprenant une porte ou une paroi selon l'une des revendications précédentes.

8. Dispositif chauffant selon la revendication précédente, dans lequel e₁ et e₂ sont compris entre 4 et 15 mm.

9. Dispositif chauffant selon l'une des revendications 7 ou 8, dans lequel la face 4 du second substrat est de préférence dépourvue de revêtement réfléchissant la chaleur, les faces 5 et 6 du troisième substrat étant dépourvues de revêtement réfléchissant la chaleur.

10. Dispositif chauffant selon l'une quelconque des revendications 7 à 9, dans lequel le second revêtement sur la seconde face 2 du premier substrat comprend de préférence au moins une couche métallique fonctionnelle à base d'argent et au moins deux ensembles diélectriques, chaque ensemble diélectrique comportant au moins une couche diélectrique, de manière à ce que chaque couche à base d'argent soit disposée entre deux couches diélectriques.

11. Dispositif chauffant selon l'une quelconque des revendications 7 à 10, dans lequel le troisième revêtement sur la première face 3 du second substrat ou sur la seconde face 4 du second substrat comprend au moins une couche métallique fonctionnelle à base d'argent et de préférence au moins deux ensembles diélectriques, chaque ensemble diélectrique comportant au moins une couche diélectrique, de manière à ce que chaque couche à base d'argent soit disposée entre deux couches diélectriques.

12. Dispositif chauffant selon l'une quelconque des revendications 7 à 11 dans lequel au moins le substrat revêtu de l'empilement est bombé et/ou trempé et de préférence dans lequel tous les substrats du vitrage sont trempés.

## Patentansprüche

1. Tür oder Wand für eine Heizvorrichtung, umfassend eine Dreifachverglasung, deren drei transparente Substrate von der Innenseite zu der Außenseite des Hohlraums der Vorrichtung Flächen begrenzen können, die jeweils von 1 bis 6 nummeriert sind, wobei mindestens die Flächen 1 und 2 des ersten Substrats und 3 und/oder 4 des zweiten Substrats mit wärmereflektierenden Beschichtungen bedeckt sind, wobei bei der Tür oder Wand der durchschnittliche Abstand e₁ zwischen dem ersten Substrat und dem zweiten Substrat und der durchschnittliche Abstand e₂ zwischen dem zweiten und dem dritten Substrat unterschiedlich ist, wobei das Verhältnis zwischen dem größten Abstand und dem kleinsten Abstand größer als 1,1, vorzugsweise größer als 1,5 und besonders bevorzugt größer als 2 oder sogar größer als 2,5 ist, e₁ und e₂ zwischen 2 und 20 mm liegen.

2. Tür oder Wand für eine Heizvorrichtung nach dem vorstehenden Anspruch, wobei die Flächen 1 und 2 des ersten Substrats und 3 des zweiten Substrats mit wärmereflektierenden Beschichtungen bedeckt sind, während die Flächen 4 bis 6 ohne derartige Beschichtungen sind.

3. Tür oder Wand für eine Heizvorrichtung nach einem der Ansprüche 1 oder 2, wobei e₁>e₂.

4. Tür oder Wand für eine Heizvorrichtung nach einem der Ansprüche 1 oder 2, wobei e₂>e₁.

5. Tür oder Wand für eine Heizvorrichtung nach Anspruch 1, wobei die Dreifachverglasung umfasst:
a) für das erste Substrat, das mit dem Hohlraum in Kontakt stehen kann:
- auf einer ersten Fläche 1, die dazu bestimmt ist, zu der Innenseite gerichtet zu sein und in direktem Kontakt mit dem Hohlraum steht, einen ersten Stapel, der die Wärme im Wesentlichen dank einer oder mehrerer Funktionsschichten auf der Basis eines transparenten leitfähigen Oxids reflektiert, das vorzugsweise aus gemischten Zinn- und Indiumoxiden oder mit Fluor oder Sb dotierten Zinnoxiden ausgewählt wird,
- auf der anderen Fläche 2, die dazu bestimmt ist, zu der Außenseite des Hohlraums gerichtet zu sein, einen zweiten Stapel, der die Wärme im Wesentlichen dank einer oder mehrerer Funktionsschichten auf der Basis eines Metalls reflektiert, das aus Gold oder Silber ausgewählt ist, vorzugsweise Silber,
b) für das zweite Substrat:
- auf der Fläche 3, die dazu bestimmt ist, zu der Innenseite des Hohlraums gerichtet zu sein, einen dritten Stapel, der die Wärme im Wesentlichen dank einer oder mehrerer Funktionsschichten auf der Basis eines transparenten leitfähigen Oxids reflektiert, das vorzugsweise aus gemischten Zinn- und Indiumoxiden oder mit Fluor oder Sb dotierten Zinnoxiden ausgewählt wird.

6. Tür oder Wand für eine Heizvorrichtung nach Anspruch 1, wobei die Dreifachverglasung umfasst:
a) für das erste Substrat, das mit dem Hohlraum in Kontakt stehen kann:
- auf einer ersten Fläche 1, die dazu bestimmt ist, zu der Innenseite gerichtet zu sein und in direktem Kontakt mit dem Hohlraum steht, einen ersten Stapel, der die Wärme im Wesentlichen dank einer oder mehrerer Funktionsschichten auf der Basis eines transparenten leitfähigen Oxids reflektiert, das vorzugsweise aus gemischten Zinn- und Indiumoxiden oder mit Fluor oder Sb dotierten Zinnoxiden ausgewählt wird,
- auf der anderen Fläche 2, die dazu bestimmt ist, zu der Außenseite des Hohlraums gerichtet zu sein, einen zweiten Stapel, der die Wärme im Wesentlichen dank einer oder mehrerer Funktionsschichten auf der Basis eines Metalls reflektiert, das aus Gold oder Silber ausgewählt ist, vorzugsweise Silber.
b) für das zweite Substrat:
- auf der Fläche 3, die dazu bestimmt ist, zu der Innenseite des Hohlraums gerichtet zu sein, einen dritten Stapel, der die Wärme im Wesentlichen dank einer oder mehrerer Funktionsschichten auf der Basis eines Metalls reflektiert, das aus Gold oder Silber ausgewählt ist, vorzugsweise Silber.

7. Heizvorrichtung. die mit einem Gehäuse versehen ist, das einen Hohlraum begrenzt, die Vorrichtung umfassend eine Tür oder eine Wand nach einem der vorstehenden Ansprüche.

8. Heizvorrichtung nach dem vorstehenden Anspruch, wobei e₁ und e₂ zwischen 4 und 15 mm liegen.

9. Heizvorrichtung nach einem der Ansprüche 7 oder 8, wobei die Fläche 4 des zweiten Substrats vorzugsweise ohne eine wärmereflektierende Beschichtung ist, die Flächen 5 und 6 des dritten Substrats ohne eine wärmereflektierende Beschichtung sind.

10. Heizvorrichtung nach einem der Ansprüche 7 bis 9, wobei die zweite Beschichtung auf der zweiten Fläche 2 des ersten Substrats vorzugsweise mindestens eine Funktionsmetallschicht auf der Basis von Silber und mindestens zwei dielektrische Anordnungen umfasst, wobei jede dielektrische Anordnung mindestens eine dielektrische Schicht aufweist, sodass jede Schicht auf Silberbasis zwischen zwei dielektrischen Schichten angeordnet ist.

11. Heizvorrichtung nach einem der Ansprüche 7 bis 10, wobei die dritte Beschichtung auf der ersten Fläche 3 des zweiten Substrats oder auf der zweiten Fläche 4 des zweiten Substrats mindestens eine metallische Funktionsschicht auf Silberbasis und vorzugsweise mindestens zwei dielektrische Anordnungen umfasst, wobei jede dielektrische Anordnung mindestens eine dielektrische Schicht umfasst, sodass jede Schicht auf Silberbasis zwischen zwei dielektrischen Schichten angeordnet ist.

12. Heizvorrichtung nach einem der Ansprüche 7 bis 11, wobei mindestens das beschichtete Substrat des Stapels gekrümmt und/oder vorgespannt ist und bei der vorzugsweise alle Substrate der Verglasung vorgespannt sind.

## Claims

1. Door or wall for a heating device, the door or wall comprising a triple-glazed unit, the three transparent substrates of which can define, from the inside to the outside of the cavity of said device, faces numbered 1 to 6 respectively, at least the faces 1 and 2 of the first substrate and 3 and/or 4 of the second substrate being covered with heat-reflecting coatings, in which door or wall the average spacing e₁ between the first substrate and the second substrate and the average spacing e₂ between the second substrate and the third substrate are different, the ratio between the larger spacing and the smaller spacing being greater than 1.1, preferably greater than 1.5 and very preferably greater than 2, or even greater than 2.5, e₁ and e₂ being between 2 and 20 mm.

2. Door or wall for a heating device as described in the preceding claim, wherein the faces 1 and 2 of the first substrate and 3 of the second substrate are covered with heat-reflecting coatings, the faces 4 to 6 having no such coatings.

3. Door or wall for a heating device as described in one of claims 1 or 2, wherein e₁>e₂.

4. Door or wall for a heating device as described in one of claims 1 or 2, wherein e₂>e₁.

5. Door or wall for a heating device as described in claim 1, wherein said triple-glazed unit comprises:
a) for the first substrate which can be in contact with the cavity:
- on a first face 1, which is intended to face inwards and is in direct contact with said cavity, a first stack which reflects heat essentially by means of one or more functional layers based on a transparent conductive oxide, preferably selected from mixed tin and indium oxides or fluorine- or Sb-doped tin oxides,
- on the other face 2, which is intended to face the outside of said cavity, a second stack which reflects the heat essentially by means of one or more functional layers based on a metal selected from gold or silver,
b) for the second substrate:
- on the face 3 intended to face the inside of said cavity, a third stack which reflects heat essentially by means of one or more functional layers based on a transparent conductive oxide, preferably selected from mixed tin and indium oxides or fluorine- or Sb-doped tin oxides.

6. Door or wall for a heating device as described in claim 1, wherein said triple-glazed unit comprises:
a) for the first substrate which can be in contact with the cavity:
- on a first face 1, which is intended to face inwards and is in direct contact with said cavity, a first stack which reflects heat essentially by means of one or more functional layers based on a transparent conductive oxide, preferably selected from mixed tin and indium oxides or fluorine- or Sb-doped tin oxides,
- on the other face 2, which is intended to face the outside of said cavity, a second stack which reflects the heat essentially by means of one or more functional layers based on a metal selected from gold or silver, preferably silver,
b) for the second substrate:
- on the face 3 intended to face the inside of said cavity, a third stack which reflects the heat essentially by means of one or more functional layers based on a metal selected from gold or silver, preferably silver.

7. Heating device provided with an enclosure defining a cavity, said device comprising a door or a wall according to one of the preceding claims.

8. Heating device according to the preceding claim, wherein e₁ and e₂ are between 4 and 15 mm.

9. Heating device according to one of claims 7 or 8, wherein the face 4 of the second substrate preferably has no heat-reflecting coating, the faces 5 and 6 of the third substrate having no heat-reflecting coating.

10. Heating device according to any of claims 7 to 9, wherein the second coating on the second face 2 of the first substrate preferably comprises at least one silver-based functional metal layer and at least two dielectric assemblies, each dielectric assembly comprising at least one dielectric layer, so that each silver-based layer is arranged between two dielectric assemblies.

11. Heating device according to any of claims 7 to 10, wherein the third coating on the first face 3 of the second substrate or on the second face 4 of the second substrate comprises at least one silver-based functional metal layer and preferably at least two dielectric assemblies, each dielectric assembly comprising at least one dielectric layer, so that each silver-based layer is arranged between two dielectric assemblies.

12. Heating device according to any of claims 7 to 11, wherein at least the substrate coated with the stack is curved and/or tempered, and preferably wherein all the substrates of the glazed unit are tempered.
